# EUROPÄISCHE PATENTANMELDUNG

(11) **EP 4 696 624 A1**
(43) Veröffentlichungstag der Anmeldung: **18.02.2026**
(21) Anmeldenummer: 24194859.5
(22) Anmeldetag: 16.08.2024
(51) Int. Cl.: B65G 47/90, B65G 47/91

(54) **ÜBERGABEVORRICHTUNG ZUM ÜBERGEBEN VON VERPACKUNGSEINHEITEN**

(71) Anmelder: Uhlmann Pac-Systeme GmbH & Co. KG, 88471 Laupheim (DE)
(72) Erfinder: Hähnel, Bernd, 88471 Laupheim (DE); Rodi, Wolfgang, 88471 Laupheim (DE); Dangelmayr, Martin, 88471 Laupheim (DE); Kleine-Hegermann, David, 88471 Laupheim (DE)
(74) Vertreter: Wächter, Jochen

(57) **Zusammenfassung**

Die Übergabevorrichtung zum Übergeben von Verpackungseinheiten (3) umfasst mindestens eine Exzentereinheit (2) mit einem drehbar gelagerten Exzenterelement (9), das eine Stangendurchführung (19) für eine Stange (13) aufweist. Die Stange (13) ist mittels der Stangendurchführung (19) drehbar und in Axialrichtung des Exzenterelements (9) verschiebbar gelagert. Die Übergabevorrichtung umfasst auch eine erste Antriebseinheit (11) zum Rotieren des Exzenterelements (9) und eine zweite Antriebseinheit (12) zum Verschieben der Stange (13). Eine Halteeinrichtung (15) zum Aufnehmen von Verpackungseinheiten (3) ist mit der Stange (13) verbunden.

## Beschreibung

Die Erfindung betrifft eine Übergabevorrichtung zum Übergeben von Verpackungseinheiten.

In Folge steigender Stückzahlen und zunehmender Produktivitätsanforderungen werden Vorrichtungen zur Herstellung, Weiterverarbeitung, Verpackung und Kommissionierung von Produkten benötigt, die sich durch eine hohe Leistungsfähigkeit auszeichnen. Dies bedeutet insbesondere, dass seitens der Betreiber eine hohe Zuverlässigkeit sowie eine sehr geringe Taktzeit bzw. Produkt-Durchlaufzeit gefordert wird. Beim Kommissionieren und Verpacken von Verpackungseinheiten ist es oftmals erforderlich, Verpackungseinheiten zu stapeln, was eine Handhabung bzw. Übergabe von einer getakteten oder kontinuierlichen Fördereinrichtung an einen Abgabebereich erfordert. Zudem besteht ein Trend zu vielfältigen und individuellen Verpackungen, welche alle mit einer Übergabe gehandhabt werden sollen. Für die Übergabe können beispielsweise bekannte universelle Portale oder Roboter verwendet werden. Diese weisen jedoch hohe Anschaffungskosten auf, sind vergleichsweise langsam und können daher nicht die geforderten Taktzeiten erreichen. Weiterhin sind solche bekannten Portale oder Roboter technisch äußerst komplex, was deren Reparatur und Instandhaltung sowie einen breiten Einsatzbereich allgemein erschwert.

Es ist daher Aufgabe der Erfindung, die oben genannten Nachteile zumindest teilweise zu überwinden und eine verbesserte Vorrichtung zur Übergabe von Verpackungseinheiten anzugeben, die eine geringe Taktzeit ermöglicht, eine Vielfalt an verschiedenen Verpackungseinheiten handhaben kann sowie einfach herzustellen und zu warten ist.

Zur Lösung dieser Aufgabe wird gemäß einem ersten Aspekt der Erfindung eine Übergabevorrichtung zum Übergeben von Verpackungseinheiten von einem Aufnahmebereich an einen Abgabebereich vorgeschlagen, wobei die Übergabevorrichtung mindestens eine Exzentereinheit umfasst. Die Exzentereinheit umfasst ein drehbar gelagertes Exzenterelement, das eine in Radialrichtung von einer Rotationsachse des Exzenterelements beabstandete Stangendurchführung aufweist, die parallel zur Rotationsachse des Exzenterelements verläuft. Die Exzentereinheit weist außerdem eine Stange auf, die sich durch das Exzenterelement hindurch erstreckt und die mittels der Stangendurchführung drehbar und in Axialrichtung des Exzenterelements verschiebbar gelagert ist. Außerdem weist die Exzentereinheit eine Halteeinrichtung auf, die, bevorzugt im Bereich eines ersten Endes der Stange, mit der Stange direkt oder indirekt verbunden ist und die dazu eingerichtet ist, mindestens eine Verpackungseinheit aufzunehmen. Eine erste Antriebseinheit ist dazu eingerichtet, das Exzenterelement zu rotieren, wodurch die Halteeinrichtung in einer ersten Ebene, die senkrecht zur Rotationsachse des Exzenterelements ist, zwischen einer Rückzugsposition und einer Arbeitsposition bewegt wird. Eine zweite Antriebseinheit ist dazu eingerichtet, die Stange in Axialrichtung des Exzenterelements zwischen einer ersten Translationsposition und einer zweiten Translationsposition zu verschieben, wodurch die Halteeinrichtung parallel zur Rotationsachse des Exzenterelements bewegt wird.

Mit besonderem Vorteil wird hierdurch eine Übergabevorrichtung zur Übergabe von Verpackungseinheiten vorgeschlagen, die einen einfachen mechanischen Aufbau aufweist sowie eine geringe Taktzeit ermöglicht. Die Übergabevorrichtung weist lediglich zwei bewegte Elemente auf, eine hohe Verfahrgeschwindigkeit und eine hohe Positioniergenauigkeit ermöglichen. Der einfache mechanische Aufbau ist besonders robust, wartungsfreundlich und zuverlässig, was für den Betreiber der Übergabevorrichtung besonders vorteilhaft ist.

Verpackungseinheiten können im Rahmen der Erfindung zum Beispiel Blisterverpackungen, Trayverpackungen, Beutelverpackungen, Wallets, Faltschachteln oder Kartons sein.

Bevorzugt ist vorgesehen, dass eine Drehlage der Halteeinrichtung während der Rotation des Exzenterelements unverändert bleibt. Hierdurch wird sichergestellt, dass die Orientierung einer von der Halteeinrichtung aufgenommenen Verpackungseinheit trotz der Rotation des Exzenterelements unverändert bleibt, was ein schnelles Übersetzen von Verpackungseinheiten begünstigt.

Vorzugsweise überträgt die zweite Antriebseinrichtung eine Vorschubkraft zur Verschiebung der Stange auf das zweite Ende der Stange.

Bevorzugt ist die Stange, besonderes bevorzugt mit ihrem zweiten Ende, an einem Lagerelement gegenüber einer Drehung um sich selbst fixiert und das Lagerelement folgt der aus der Rotation des Exzenterelements resultierenden Drehbewegung der Stange um die Rotationsachse. Mit dieser Ausgestaltung kann die Drehlage der Halteeinrichtung bei rotierender Stange auf einfache Weise unverändert gehalten werden. Die Lagerung wird bevorzugt durch eine Gelenkstange oder Linearführungen ausgebildet. Besonders bevorzugt sind zwei Linearführungen vorgesehen. Vorzugsweise sind die erste und die zweite Linearführung senkrecht zueinander angeordnet.

Bevorzugt ist die Stange zumindest abschnittsweise eine hohle Stange. Der so gebildete Durchgangskanal durch die Stange erstreckt sich bevorzugt über die gesamte Länger der Stange. Der Durchgangskanal kann ausschließlich zum ersten Ende und zum zweiten Ende der Stange hin offen sein. Zusätzlich kann der Durchgangskanal zumindest teilweise zu einer äußeren Umfangsseite der Stange hin offen ausgebildet sein. Beispielsweise kann der Durchgangskanal als eine Nut ausgestaltet sein, die sich von dem ersten Ende zum zweiten Ende der Stange erstreckt. Der Durchgangskanal ermöglicht es, Leitungen durch die Stange zur Halteeinrichtung zu führen. Der Durchgangskanal weist vorzugsweise einen Durchmesser zwischen 10 und 50 mm, besonders bevorzugt zwischen 20 und 30 mm auf. Alternativ kann der Durchgangskanal selbst als eine Leitung verwendet werden, um zum Beispiel Druckluft für die Halteeinrichtung bereitzustellen.

Bevorzugt können die erste Antriebseinheit und die zweite Antriebseinheit unabhängig voneinander ansteuerbar sein. Dies ermöglicht eine Überlagerung der rotatorischen Bewegung der Halteeinrichtung mit der translatorischen Bewegung der Halteeinrichtung zwischen der ersten und zweiten Translationsposition, womit folglich die Taktzeit der Übergabevorrichtung gesenkt werden kann. Dies steigert mit besonderem Vorteil die Produktivität der Übergabevorrichtung.

Es ist bevorzugt, dass die Exzentereinheit dazu eingerichtet ist, eine Bewegung der Halteeinrichtung parallel zur Rotationsachse des Exzenterelements und parallel zur ersten Ebene zumindest abschnittsweise gleichzeitig auszuführen. Durch diese beiden gleichzeitigen Bewegungen kann in vorteilhafter Weise die Taktzeit der Übergabevorrichtung reduziert werden. Weiterhin ist es durch die zumindest abschnittsweise gleichzeitigen Bewegungen möglich, die Halteeinrichtung an jeder Stelle des Arbeitsbereichs der Übergabevorrichtung zu positionieren. Der vollständige Arbeitsbereich ist vorzugsweise zylindrisch ausgebildet. Genauer wird der Arbeitsbereich durch den Abstand der Stangendurchführung bzw. der Stange zur Rotationsachse und den Abstand zwischen der ersten und zweiten Translationsposition bestimmt.

Eine vorteilhafte Weiterbildung der Erfindung sieht vor, dass die Exzentereinheit dazu eingerichtet ist, die oben genannten Bewegungen der Halteeinrichtung mit einer Bewegung einer Fördereinrichtung der Übergabevorrichtung im Aufnahmebereich zu synchronisieren. Alternativ oder ergänzend ist bevorzugt, dass die Exzentereinheit dazu eingerichtet ist, die oben genannten Bewegungen der Halteeinrichtung mit einer Bewegung eines Fördermittels für Verpackungseinheiten im Abgabebereich zu synchronisieren. Hierdurch kann die Übergabevorrichtung besonders effizient betrieben werden.

Eine Weiterbildung der Erfindung sieht vor, dass die Übergabevorrichtung eine Mehrzahl von Exzentereinheiten umfasst, die derart nebeneinander angeordnet sind, dass die Rotationsachsen der Mehrzahl von Exzenterelementen parallel zueinander angeordnet sind. Die Multiplikation von Exzentereinheiten steigert die Produktivität der Übergabevorrichtung, wodurch in einer gegebenen Taktzeit mehr Verpackungseinheiten übergeben werden können. Weiterhin fördert diese Maßnahme einen kompakten Aufbau der Übergabevorrichtung. Vorzugsweise sind dabei eine Mehrzahl von Verpackungseinheiten in ihren Aufnahmebereichen und/oder Abgabebereichen ebenfalls zumindest teilweise hintereinander angeordnet.

Des Weiteren ist es vorteilhaft, dass die Stangen der Mehrzahl von Exzentereinheiten miteinander gekoppelt sind. Dies kann beispielsweise über eine Koppelstange oder Koppelplatte zwischen den Stangen geschehen. In einer bevorzugten Ausgestaltung können an der Koppelstange oder Koppelplatte bevorzugt auch die Halteeinrichtungen angeordnet sein. Im Fall von zwei Stangen können an der Koppelstange oder Koppelplatte auch mehr als zwei Halteeinrichtungen angeordnet sein. Die Koppelstange oder Koppelplatte erstreckt sich in ihrer Haupterstreckungsrichtung bevorzugt senkrecht zur Axialrichtung der Mehrzahl von Stangen.

Die Mehrzahl von Exzentereinheiten kann dann jeweils mittels separater erster Antriebseinrichtungen angetrieben werden, bevorzugt liegt aber nur ein Motor vor, der zumindest zwei bis hin zu allen Exzentereinheiten synchron antreibt.

Im Fall mehrerer Exzentereinheiten ist die zweite Antriebseinrichtung bevorzugt dazu eingerichtet, die Stangen von zumindest zwei bis hin zu allen Exzentereinheiten gemeinsam in Axialrichtung der Exzenterelemente zwischen der ersten Translationsposition und der zweiten Translationsposition zu verschieben. Hiermit ist es möglich, lediglich eine zweite Antriebseinrichtung für eine Mehrzahl von Exzentereinheiten zu verwenden. Weiterhin kann durch eine gemeinsame Bewegung der Halteeinrichtungen der Mehrzahl von Exzentereinheiten eine gleichmäßige Taktung zum Abgeben der Verpackungseinheiten im Abgabebereich erreicht werden.

Es ist bevorzugt, wenn zumindest einige Exzentereinheiten der Mehrzahl von Exzentereinheiten derart verstellbar sind, dass ein Abstand zwischen den Rotationsachsen bestimmter Exzenterelemente relativ zueinander einstellbar ist. Damit kann die Übergabevorrichtung einfach an verschiedene Formate von Verpackungseinheiten und/oder unterschiedliche Abstände zwischen den Verpackungseinheiten angepasst werden.

Alternativ oder zusätzlich kann allgemein im Rahmen der Erfindung eine Anpassung an verschiedene Formate von Verpackungseinheiten und/oder unterschiedliche Abstände zwischen den Verpackungseinheiten auch durch eine Verstellung der Halteeinrichtungen und/oder der Sauggreifer relativ zu der Stange oder den Stangen erfolgen.

Eine bevorzugte Weiterbildung der Erfindung sieht vor, dass die Halteeinrichtung dazu eingerichtet ist, eine Mehrzahl von Verpackungseinheiten aufzunehmen. Hierdurch kann die Produktivität der Übergabevorrichtung weiter gesteigert werden und deren Taktzeit gesenkt werden. Eine zweckmäßige Weiterbildung sieht vor, dass die Halteeinrichtung dazu eingerichtet ist, einzelne Verpackungseinheiten der Mehrzahl von Verpackungseinheiten individuell bzw. separat aufzunehmen und/oder abzugeben. Die Halteeinrichtung kann somit auf Leerstellen im Aufnahmebereich reagieren, wodurch eine effiziente Übergabe ohne Wartezeiten gefördert wird.

Es ist bevorzugt, dass die Halteeinrichtung mindestens einen Sauggreifer aufweist. Sauggreifer sind universal einsetzbar und können Produkte mit ebenen Oberflächen sicher tragen. Außerdem ist die Reaktionszeit zur Aufnahme und Abgabe einer Verpackungseinheit bei Verwendung eines Sauggreifers äußerst gering. Alternativ kann jegliche andere Art von Greifern vorgesehen sein, zum Beispiel ein Klemmgreifer oder Bernoulligreifer.

Vorzugsweise beträgt ein Abstand zwischen der ersten Translationsposition und der zweiten Translationsposition 30 bis 800 mm, bevorzugt 40 bis 700 mm und besonders bevorzugt 50 bis 600 mm. Der Abstand wird in einer Richtung gemessen, die parallel zur Rotationsachse des Exzenterelements ist. Wenn die Strecke in den angegebenen Bereichen liegt, kann eine Vielzahl von unterschiedlichen Verpackungseinheitsformaten in unterschiedlichen Anordnungen mittels der Übergabevorrichtung übergeben werden und dennoch die Verfahrwege der Stange zwischen der ersten und zweiten Translationsposition kurz gehalten werden.

Vorzugsweise beträgt eine Länge der Kreissehne zwischen der Rückzugsposition und der Arbeitsposition 10 bis 200 mm, bevorzugt 20 bis 150 mm und besonders bevorzugt 30 bis 100 mm. Wenn die Länge in die angegebenen Bereiche fällt, ist das Exzenterelement kompakt und kann schnell beschleunigt und abgebremst werden, wodurch die Taktzeit positiv beeinflusst wird.

Vorzugsweise ist das Exzenterelement rotatorisch in der Exzentereinheit gelagert. Das Exzenterelement ist bevorzugt zylindrisch, besonders bevorzugt eine Welle oder eine kreisförmige Platte. Zusätzlich kann das Exzenterelement mehrteilig sein.

Grundsätzlich kann das Exzenterelement einen oder mehrere Lagerabschnitte aufweisen. Besonders bevorzugt weist das Exzenterelement zwei Lagerabschnitte auf, die jeweils an Endbereichen des Exzenterelements entlang dessen Rotationsachse angeordnet sind. Weiterhin ist der mindestens eine Lagerabschnitt bevorzugt konzentrisch zu der Rotationsachse der Exzenterelements. Die Lagerabschnitte werden vorzugsweise jeweils von einem Radiallager gelagert, zum Beispiel einem Kugellager, das von einem Gehäuse der Exzentereinheit abgestützt wird.

Es ist ferner ebenfalls denkbar, dass das Exzenterelement mehrteilig ausgebildet ist. Insbesondere können die zwei Lagerabschnitte und der Mittelabschnitt als einzelne Bauteile ausgebildet werden, die zusammengefügt sind. Durch die mehrteilige Ausbildung des Exzenterelements kann dessen Fertigung wesentlich vereinfacht und vergünstigt werden.

Allgemein kann das Exzenterelement in bevorzugter Ausgestaltung zwei sich gegenüberliegende Wellen, Scheiben oder Platten umfassen, zwischen denen ein verbindender Mittelabschnitt liegt, der nicht konzentrisch zur Rotationsachse des Exzenterelements ist. Der Mittelabschnitt kann vorzugsweise zylindrisch ausgebildet sein.

Das Exzenterelement kann weiterhin Gegengewichte zum Ausgleich von Massenmomenten erster und/oder zweiter Ordnung aufweisen. Durch die genannten Maßnahmen ist es möglich, ein Exzenterelement bereitzustellen, das wenige bis keine Vibrationen während des Betriebs zeigt, wodurch unter anderem hohe Verfahrgeschwindigkeiten der Übergabevorrichtung realisiert werden können.

Das Gehäuse der Exzentereinheit kann einteilig oder mehrteilig ausgebildet sein. Besonders bevorzugt ist das Gehäuse mehrteilig ausgebildet. Das mehrteilige Gehäuse kann zwei Montageplatten aufweisen, die durch Distanzhülsen voneinander beabstandet sind. Jeder der Montageplatten stützt vorzugsweise ein Radiallager zur Lagerung des Exzenterelements ab. Weiterhin ist bevorzugt, dass sich das Exzenterelement zwischen und durch die beiden Montageplatten hindurch erstreckt. Vorzugsweise erstrecken sich zumindest die Lagerabschnitte des Exzenterelements jeweils durch die Montageplatten hindurch, während der Mittelabschnitt des Exzenterelements sich zwischen den Montageplatten erstreckt. Weiter kann es vorgesehen sein, dass sich die zwei Montageplatten unterscheiden, wobei lediglich eine Montageplatte dazu ausgebildet ist, die erste Antriebseinheit aufzunehmen. Hierdurch wird ein besonders einfaches und leichtes Gehäuse vorgeschlagen.

Es ist ferner bevorzugt, dass die Stangendurchführung das Exzenterelement parallel zu dessen Rotationsachse vollständig durchdringt. Die Stangendurchführung weist vorzugsweise ein Radial-Axial-Lager auf, das dazu eingerichtet ist, die Stange sowohl axial als auch rotatorisch bezüglich des Exzenterelements zu lagern.

Vorzugsweise weist die Stange einen zylindrischen Querschnitt auf. Der Querschnitt der Stange ist allerdings nicht auf einen spezifischen Querschnitt beschränkt. Sofern die Stange einen nicht zylindrischen Querschnitt aufweist, kann ein Lagerelement vorgesehen sein, das die Stange in Axialrichtung lagert und das Radiallager wiederum das Lagerelement samt der Stange rotatorisch lagert.

Die Halteeinrichtung rotiert um die Rotationsachse des Exzenterelements in einer ersten Ebene. Vorzugsweise ist die erste Ebene nicht stationär und kann durch die Verschiebung der Stange zusammen mit der Halteeinrichtung bewegt werden. Die Halteeinrichtung rotiert vorzugsweise in einem durch die Stangendurchführung vorgegebenen Abstand um die Rotationsachse des Exzenterelements herum.

Die erste Antriebseinrichtung kann das Exzenterelement direkt oder indirekt rotatorisch antreiben. Die erste Antriebseinheit wird vorzugsweise durch einen ansteuerbaren Schrittmotor oder einen Servomotor mit Drehgeber gebildet. Hierdurch kann eine rotatorische Position, eine Geschwindigkeit und eine Winkelbeschleunigung des Exzenterelements und damit der Halteeinrichtung gesteuert bzw. geregelt werden. Die erste Antriebseinrichtung überträgt eine rotatorische Antriebskraft auf das Exzenterelement bevorzugt über ein Getriebe. Das Getriebe weist bevorzugt eine Kette oder einen Zahnriemen auf, die ein Drehmoment des ersten Antriebs auf das Exzenterelement übertragen. Vorzugsweise stellt das Getriebe eine formschlüssige Kraftübertragung bereit. Die Verwendung eines Getriebes, insbesondere eines mit einer Untersetzung, erhöht im Allgemeinen das auf die Exzentereinheit wirkende Drehmoment und die rotatorische Positioniergenauigkeit des Exzenterelements.

Die zweite Antriebseinrichtung wird ebenfalls durch einen Schrittmotor oder einen Servomotor mit Drehgeber gebildet, wodurch die Verschiebung der Stange und damit die Bewegung der Halteeinrichtung parallel zur Rotationsachse des Exzenterelements gesteuert bzw. geregelt werden kann.

Allgemein können der Aufnahmebereich und der Abgabebereich in drei Dimensionen voneinander beabstandet sein. Der Aufnahme- und Abgabebereich sind zweckmäßig so dimensioniert, dass in ihnen jeweils zumindest eine Verpackungseinheit angeordnet werden kann. Vorzugsweise sind der Aufnahme- und Abgabebereich stationär. Alternativ kann zumindest einer aus Aufnahme- und Abgabebereich bewegt sein.

Der Aufnahmebereich und der Abgabebereich können auch in einer Dimension oder in zwei Dimensionen auf einer gemeinsamen Linie liegen.

Im Aufnahmebereich kann bevorzugt eine kontinuierliche laufende Fördereinrichtung angeordnet sein, die die Verpackungseinheiten herantransportiert. Auch eine getaktet bewegte Fördereinrichtung ist denkbar. Anstelle der Fördereinrichtung 5 können allgemein im Rahmen der Erfindung auch andere kontinuierlich oder getaktet bewegte oder stationäre Förder- oder Stützmittel vorgesehen sein. Jedes dieser Elemente definiert für sich an einer vordefinierten Stelle den Aufnahmebereich.

Im Abgabebereich können ein Stapelschacht oder andere kontinuierlich oder getaktet bewegte oder stationäre Förder- oder Stützmittel vorgesehen sein. Jedes dieser Elemente definiert für sich an einer vordefinierten Stelle den Abgabebereich.

Die Rotationsbewegung der Stange und somit der Halteeinrichtung kann kontinuierlich oder getaktet erfolgen. Sie kann außerdem in nur einer Richtung oder abschnittsweise in entgegengesetzten Richtungen erfolgen. Auf diese Weise können vielfältige Bewegungsmuster der Halteeinrichtung eingestellt werden.

Dementsprechend sind auch die Rückzugsposition und die Arbeitsposition der Halteeinrichtung nicht fest vorgegeben. Sie können sich an unterschiedlichen Stellen ihrer Kreisbewegung befinden.

Die Arbeitsposition liegt beispielsweise in den in den Figuren näher beschriebenen Ausführungsformen an einem unteren Scheitelpunkt der Kreisbewegung. Sie kann aber auch, insbesondere im Fall einer hin- und hergehenden Rotationsbewegung, an einer anderen Stelle des Kreises liegen.

Die Rückzugsposition ist ebenfalls nicht fest vorgegeben. Sie liegt beispielsweise in den in den Figuren näher beschriebenen Ausführungsformen an einem oberen Scheitelpunkt der Kreisbewegung. Sie kann aber auch, insbesondere im Fall einer hin- und hergehenden Rotationsbewegung, an einer anderen Stelle des Kreises liegen.

Die Arbeitsposition muss im Aufnahmebereich und im Abgabebereich zudem nicht zwangsläufig gleich sein. Es ist auch denkbar, dass die Verpackungseinheiten auf einem anderen Höhenniveau aufgenommen werden als sie abgegeben werden.

Ein erfindungsgemäßes Verfahren zum Übergeben von Verpackungseinheiten von einem Aufnahmebereich an einen Abgabebereich mittels der oben beschriebenen Übergabevorrichtung umfasst folgende Schritte:
- Rotieren des Exzenterelements mittels der ersten Antriebseinheit, um die Halteeinrichtung in eine Arbeitsposition zu bewegen;
- Aufnehmen der mindestens einen Verpackungseinheit in dem Aufnahmebereich mittels der Halteeinrichtung;
- Rotieren des Exzenterelements mittels der ersten Antriebseinheit, um die Halteeinrichtung in eine Rückzugsposition zu bewegen;
- Verschieben der Stange von der ersten Translationsposition in die zweite Translationsposition mittels der zweiten Antriebseinheit;
- Rotieren des Exzenterelements mittels der ersten Antriebseinheit, um die Halteeinrichtung in eine Arbeitsposition zu bewegen;
- Abgeben der mindestens einen Verpackungseinheit im Abgabebereich mittels der Halteeinrichtung;
- Rotieren des Exzenterelements mittels der ersten Antriebseinheit, um die Halteeinrichtung in eine Rückzugsposition zu bewegen; und
- Verschieben der Stange von der zweiten Translationsposition in die erste Translationsposition mittels der zweiten Antriebseinheit.

Mithilfe dieses vorgeschlagenen Verfahrens kann eine Verpackungseinheit auf einfache Weise und in einer äußerst geringen Taktzeit übergeben werden.

Es ist nicht notwendig, dass jeder Schritt des erfindungsgemäßen Verfahrens abgeschlossen sein muss, bevor der nächste Schritt beginnt. Vielmehr werden insbesondere die Schritte des Aufnehmens und des Abgebens bevorzugt während der Rotationsbewegung erfolgen.

Bevorzugt ist es auch, dass die translatorische Verschiebung der Stange teilweise überlappend mit der Rotationsbewegung stattfindet, um Zeit zu sparen.

Eine weitere vorteilhafte Ausgestaltung der Erfindung sieht vor, dass die Verpackungseinheiten kontinuierlich auf einer Fördervorrichtung bewegt werden und die Bewegungen der mindestens einen Exzentereinheit mit den Bewegungen der Verpackungseinheiten auf der Fördervorrichtung synchronisiert sind.

Es wird klargestellt, dass alle Merkmale, die zur erfindungsgemäßen Übergabevorrichtung beschrieben wurden, ebenfalls auf das erfindungsgemäße Verfahren übertragbar sind und umgekehrt.

Im Folgenden wird die Erfindung anhand von Zeichnungen näher erläutert.
- Fig. 1: ist eine schematische Perspektivansicht einer erfindungsgemäßen Übergabevorrichtung gemäß einer ersten Ausführungsform während der Bewegung des Exzenterelements in Richtung der Arbeitsposition im Aufnahmebereich, wobei sich die Halteeinrichtung in der ersten Translationsposition befindet;
- Fig. 2: ist eine schematische Perspektivansicht der Übergabevorrichtung aus Fig. 1 mit dem Exzenterelement in der Arbeitsposition;
- Fig. 3: ist eine schematische Perspektivansicht der Übergabevorrichtung aus Fig. 1 während der Bewegung der Halteeinrichtung von der ersten Translationsposition in Richtung der zweiten Translationsposition zwischen dem Aufnahmebereich und dem Abgabebereich;
- Fig. 4: ist eine schematische Perspektivansicht der Übergabevorrichtung aus Fig. 1 mit dem Exzenterelement in der Arbeitsposition und der Halteeinrichtung in der ersten Translationsposition, wobei zwischen den einzelnen auf der Fördereinrichtung liegenden Verpackungseinheiten unterschiedlichen Abstände vorliegen;
- Fig. 5: ist eine schematische Perspektivansicht einer erfindungsgemäßen Übergabevorrichtung gemäß einer zweiten Ausführungsform während der Bewegung des Exzenterelements in Richtung der Arbeitsposition im Aufnahmebereich, wobei sich die Halteeinrichtung in der ersten Translationsposition befindet;
- Fig. 6: ist eine schematische Perspektivansicht der Übergabevorrichtung aus Fig. 5 mit dem Exzenterelement in der Arbeitsposition und der Halteeinrichtung in der zweiten Translationsposition im Abgabebereich;
- Fig. 7: ist eine schematische Perspektivansicht einer erfindungsgemäßen Übergabevorrichtung gemäß einer dritten Ausführungsform während der Bewegung der Exzenterelemente in Richtung der Arbeitsposition in den Aufnahmebereichen, wobei sich die Halteeinrichtungen in der ersten Translationsposition befinden.

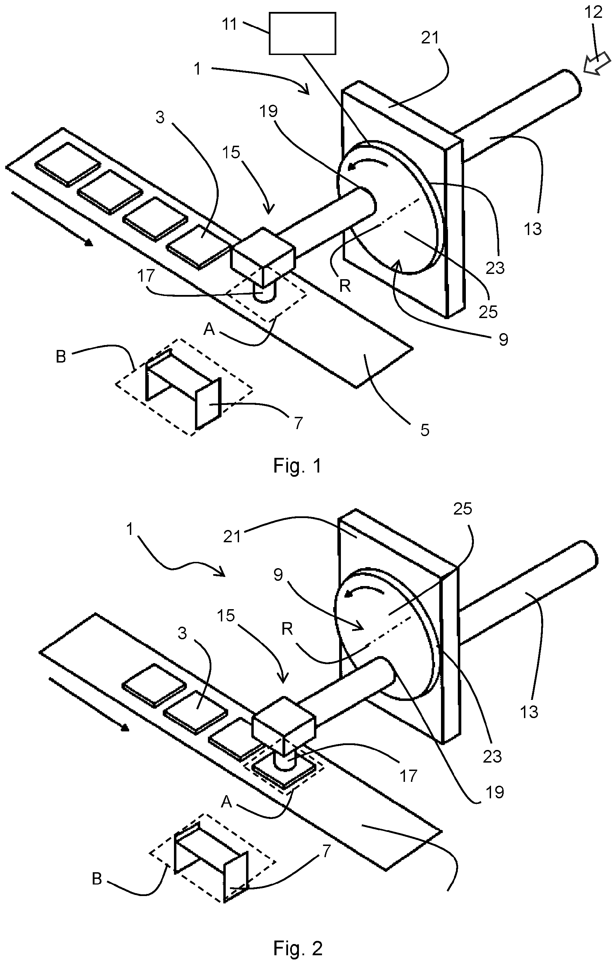

In Fig. 1 ist eine erfindungsgemäße Übergabevorrichtung gemäß einer ersten Ausführungsform dargestellt. Die Übergabevorrichtung wird innerhalb einer Verpackungsmaschine eingesetzt, um Verpackungseinheiten 3, die bereits befüllt und versiegelt sind, von einer Fördereinrichtung 5 in einen Stapelschacht 7 umzusetzen. Der Stapelschacht 7 dient dazu, die Verpackungseinheiten 3 zu stapeln und auftragsbezogen zu kommissionieren. Die Fördereinrichtung 5 fördert die Verpackungseinheiten 3 in einer kontinuierlichen Geschwindigkeit in den Aufnahmebereich A.

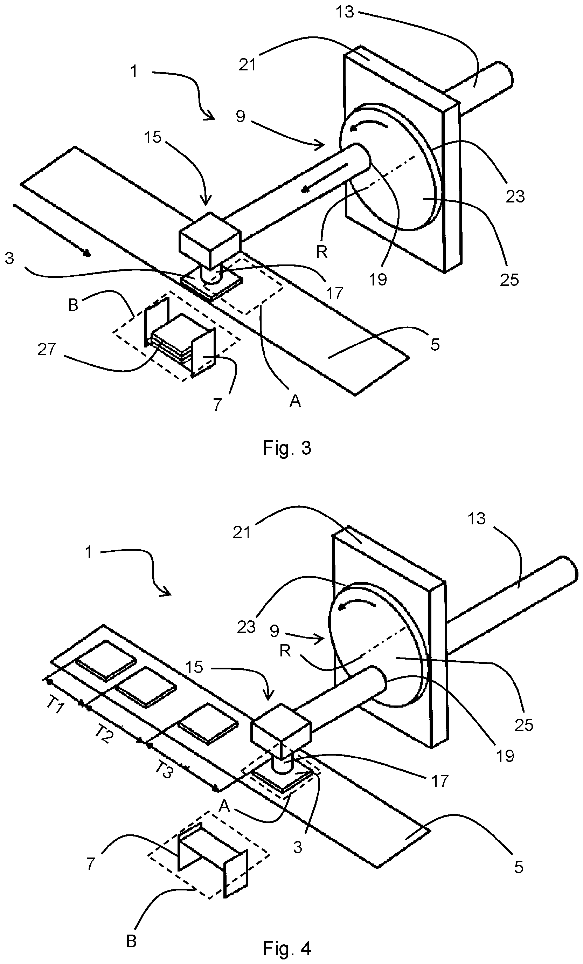

Der Stapelschacht 7 ist in Fig. 1 leer. Die Verpackungseinheiten 3 werden stets an der gleichen Stelle im Stapelschacht 7 abgegeben. Nach der Abgabe einer Verpackungseinheit 3 wird der Stapelschacht 7 bevorzugt abgesenkt. Ein befüllter, abgesenkter Stapelschacht 7 ist in Figur 3 dargestellt.

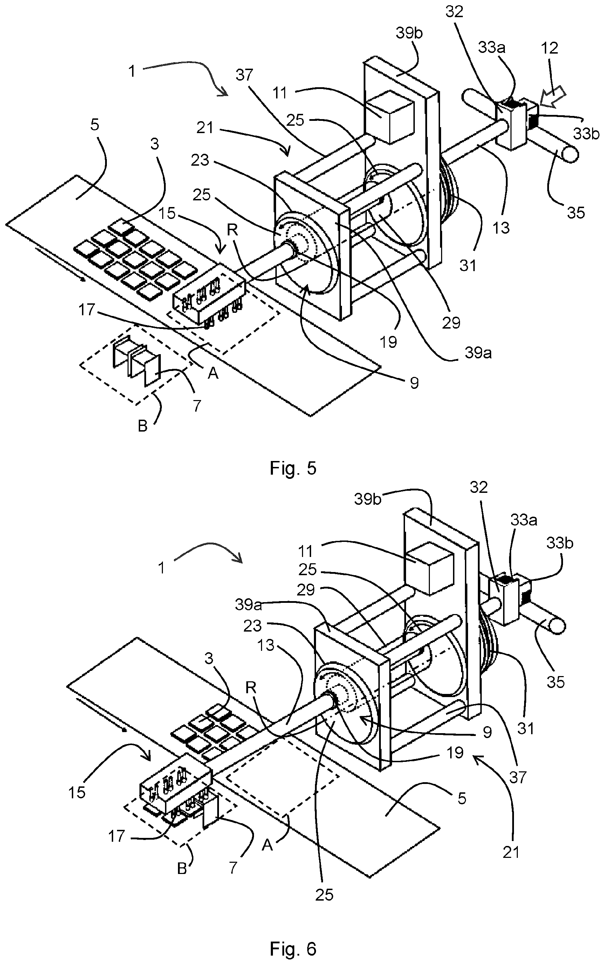

Die Übergabevorrichtung umfasst in der erfindungsgemäßen Ausführungsform eine Exzentereinheit 2, die ein Exzenterelement 9 umfasst, das rotatorisch von einer ersten Antriebseinheit 11 angetrieben ist. Die Antriebseinheit 11 ist unter Bezugnahme auf Fig. 5 weiter unten näher beschrieben.

Das Exzenterelement 9 weist weiter eine Stange 13 auf, die drehbar und verschiebbar von dem Exzenterelement 9 gelagert wird. An einem Ende der Stange 13 ist eine Halteeinrichtung 15 vorgesehen, die dazu eingerichtet ist, eine Verpackungseinheit 3 aufzunehmen und abzugeben. In dieser bevorzugten Ausführungsform weist die Halteeinrichtung 15 einen Sauggreifer 17 auf.

Das Exzenterelement 9 dreht sich um eine Rotationsachse R, wobei die Stange 13 parallel zur Rotationsachse R verläuft und exzentrisch zur Rotationsachse R gelagert ist. Die Stange 13 erstreckt sich mittels einer Stangendurchführung 19 durch das Exzenterelement 9 hindurch. Die Stangendurchführung 19 weist weiter ein Radial-Axial-Lager auf, das derart ausgebildet ist, dass die Stange 13 sowohl axial, parallel zur Rotationsachse R, verschiebbar als auch drehbar gelagert ist. Die Orientierung der Halteeinrichtung 15 ist somit unabhängig von der rotatorischen Position des Exzenterelements 9. Das Exzenterelement 9 selbst ist in einem Gehäuse 21 der Exzentereinheit 2 rotatorisch mittels eines umfangsseitigen Radiallagers 23 gelagert. In der in Fig. 1 dargestellten Ausführungsform ist das Exzenterelement 9 als eine plattenförmige Scheibe ausgebildet, die zugleich als Lagerabschnitt 25 dient. Der Lagerabschnitt 25 ist außenumfangsseitig durch das Radiallager 23 aufgenommen, das wiederum von dem Gehäuse 21 der Exzentereinheit 2 abgestützt wird.

Die Stange 13 ist neben der Lagerung im Exzenterelement 9 auch an einer anderen Stelle derart gelagert, dass sie von einem zweiten Antrieb 12 translatorisch parallel zur Rotationsachse R verschoben werden kann. Eine mögliche Ausgestaltung des Lagerelements 32 für die Stange 13 ist unter Bezugnahme auf Fig. 5 weiter unten beschrieben.

In Fig. 1 wird das Exzenterelement 9 in Richtung der Arbeitsposition bewegt, in der die Halteeinrichtung 15 die Verpackungseinheit 3 von der Fördereinrichtung 5 aufnehmen kann. Die Halteeinrichtung 15 befindet sich in Fig. 1 in der ersten Translationsposition und ist hier über dem Aufnahmebereich A positioniert.

Fig. 2 zeigt die Übergabevorrichtung der Fig. 1, in der sich das Exzenterelement 9 in der Arbeitsposition befindet und die Halteeinrichtung 15 sich in der ersten Translationsposition befindet. In der Arbeitsposition befindet sich der Sauggreifer 17 in Kontakt mit der Verpackungseinheit 3, so dass diese sicher von dem Sauggreifer 17 ergriffen werden kann. In der Zusammenschau mit Fig. 1 ist zu erkennen, dass die Bewegung der Fördereinrichtung 5 mit der Bewegung der Exzentereinheit 2 synchronisiert ist. Mit anderen Worten ist die Position von mindestens einer Verpackungseinheit 3 im Aufnahmebereich A mit den Bewegungen der Halteeinrichtung 15 um die Rotationsachse R herum und axial, parallel zur Rotationsachse R, synchronisiert. Das Exzenterelement 9 wird damit derart von der ersten Antriebseinheit 11 gesteuert bzw. geregelt, dass sich das Exzenterelement 9 in der Arbeitsposition befindet, wenn sich eine Verpackungseinheit 3 im Aufnahmebereich A befindet.

In Fig. 3 ist zu erkennen, dass die Halteeinrichtung 15 in Richtung der zweiten Translationsposition bewegt wird. Im Stapelschacht 7 wurde bereits ein Stapel 27 an übergebenen Verpackungseinheiten 3 gebildet. Ferner ist der Stapelschacht 7 gegenüber dem Zustand, der in den Fig. 1 und 2 dargestellt ist, abgesenkt. In dieser Ausgestaltung ist beispielhaft keine weitere Verpackungseinheit 3 in dem abgebildeten Abschnitt der Fördervorrichtung 5 dargestellt, um einen weiteren Anwendungsbereich der Übergabevorrichtung im Vergleich zu Fig. 1 und 2 aufzuzeigen. Dies könnte beispielsweise bei einer getakteten Bewegung oder einer sehr schnellen Bewegung der Fördervorrichtung 5 der Fall sein.

Fig. 4 zeigt die Exzentereinheit 2 aus Fig. 1 mit dem Exzenterelement 9 in der Arbeitsposition und der Halteeinrichtung 15 in der ersten Translationsposition, wobei unterschiedliche Abstände T1, T2 und T3 zwischen den einzelnen Verpackungseinheiten 3 auf der Fördereinrichtung 5 veranschaulicht sind. Durch die Synchronisation können selbst Leerstellen auf der Fördereinrichtung 5 durch die erfindungsgemäße Übergabevorrichtung kompensiert werden, wodurch diese äußerst flexibel einsetzbar ist.

Fig. 5 zeigt eine erfindungsgemäße Übergabevorrichtung gemäß einer zweiten Ausführungsform während der Bewegung des Exzenterelements 9 in Richtung der Arbeitsposition im Aufnahmebereich A, wobei sich die Halteeinrichtung 15 in der ersten Translationsposition befindet. Die zweite Ausführungsform stellt eine Abwandlung der ersten Ausführungsform dar, weshalb im Folgenden zu Fig. 5 lediglich auf die Unterschiede zwischen diesen beiden Ausführungsformen eingegangen wird.

Das Gehäuse 21 der zweiten Ausführungsform ist mehrteilig ausgebildet. Es umfasst zwei Montageplatten 39a, 39b, die jeweils ein Radiallager 23 aufnehmen, welches das Exzenterelement 9 rotatorisch lagert. Die Montageplatten 39a, 39b werden von einer Mehrzahl von Distanzhülsen 37 beabstandet, wodurch ein einfaches Gehäuse 21 gebildet wird.

Weiterhin ist zu erkennen, dass die erste Antriebseinheit 11 das Exzenterelement 9 mittels eines Riementriebs 31 antreibt. Der Riemen des Riementriebs 31 umschlingt dabei einen Abschnitt des Exzenterelements 9. Der Riementrieb 31 ist von formschlüssiger Art, wie beispielsweise ein Zahnriemengetriebe, so dass eine exakte Positionierung des Exzenterelements 9 über die erste Antriebseinheit 11 erzielt wird.

Das Exzenterelement 9 ist hier mehrteilig ausgebildet, wobei zwei Lagerabschnitte 25 an gegenüberliegenden Seiten des Exzenterelements 9 entlang dessen Rotationsachse R angeordnet sind. Die Lagerabschnitte 25 werden durch einen Mittelabschnitt 29 voneinander beabstandet. Der Mittelabschnitt 29 weist einen gegenüber den Lagerabschnitten 25 veränderten Querschnitt auf. Ferner ist der Mittelabschnitt 29 hier zylindrisch dargestellt, wobei dessen Zylinderachse parallel zur Rotationsachse R angeordnet ist.

Die Stangendurchführung 19 erstreckt sich durch die beiden Lagerabschnitte 25 und den Mittelabschnitt 29 hindurch. Das Radial-Axial-Lager der Stangendurchführung 19 (hier nicht dargestellt) kann in dieser Ausführungsform zumindest teilweise auch im Mittelabschnitt 29 angeordnet sein. Weiterhin weist die Exzentereinheit 2 eine Halteeinrichtung 15 mit einer Mehrzahl von Sauggreifern 17 auf, die entsprechend eine Mehrzahl von Verpackungseinheiten 3 aufnehmen und abgeben können.

Zudem ist in sind in der Fig. 5 als Lagerelement 32 zwei Linearführungen 33a, 33b zur Lagerung des zweiten Endes der Stange 13 vorgesehen. Die zwei Linearführungen 33a, 33b sind senkrecht zueinander angeordnet. Die Linearführung 33b ist mit einer Koppelstange 35 verbunden, die von dem zweiten Antrieb 12 in einer Richtung entlang der Rotationsachse R bewegt wird, um die Halteeinrichtung 15 zwischen der ersten und zweiten Translationsposition zu verschieben. Die Linearführungen 33a, 33b lagern die Stange 13 in zwei Richtungen, die jeweils senkrecht zueinander und senkrecht zur Rotationsachse R sind. Weiterhin kann in Fig. 5 erkannt werden, dass die Koppelstange 35 senkrecht zur Stange 13 angeordnet ist.

Der Aufnahmebereich A ist in der zweiten Ausführungsform entsprechen derart dimensioniert, dass eine bestimmte Anzahl von Verpackungseinheiten 3 in diesem angeordnet werden kann, die von der Halteeinrichtung 15 gleichzeitig aufgenommen werden können. Im Abgabebereich B befinden sich hier zwei nebeneinander angeordnete Stapelschächte 7.

In Fig. 6 ist die Übergabevorrichtung aus Fig. 5 mit dem Exzenterelement 9 in der Arbeitsposition und der Halteeinrichtung 15 in der zweiten Translationsposition im Abgabebereich B zu sehen. In der Zusammenschau mit Fig. 5 ist die Bewegung der Halteeinrichtung 15 zwischen der ersten und der zweiten Translationsposition erkennbar. An der Halteeinrichtung 15 sind sechs Verpackungseinheiten 3 mittels der Sauggreifer 17 aufgenommen. Die Halteeinrichtung 15 ist in der zweiten Ausführungsform bevorzugt dazu ausgebildet, die Verpackungseinheiten 3 selektiv aufzunehmen und abzugeben. In Fig. 6 ist zu erkennen, dass die Halteeinrichtung 15 jeweils zwei Verpackungseinheiten 3 selektiv in den zwei in dem Abgabebereich B nebeneinander angeordneten Stapelschächten 7 ablegt. Auch ist in Fig. 6 zu erkennen, dass die Koppelstange 35 samt den Linearführungen 33a, b in Axialrichtung der Stange 13 verschoben ist.

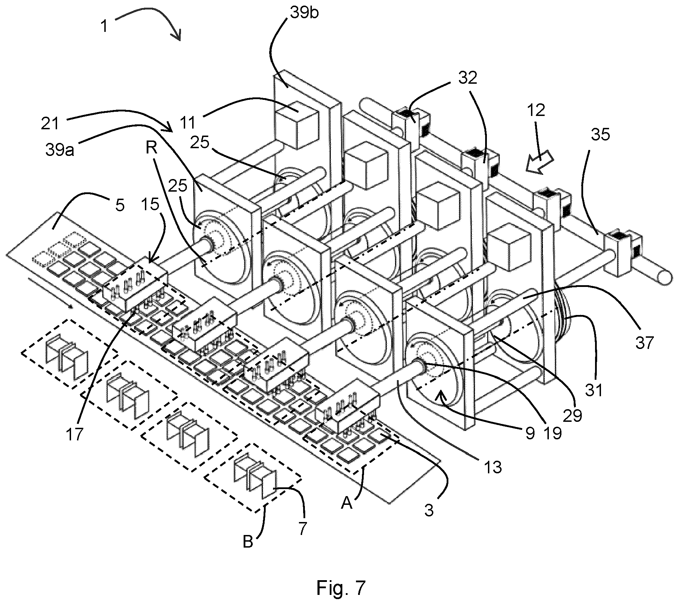

Fig. 7 stellt eine dritte Ausführungsform der Übergabevorrichtung mit einer Mehrzahl von Exzentereinheiten 2 wie in der zweiten Ausführungsform nach Fig. 5 und 6 beschrieben dar.

Die Abbildung zeigt den Zustand während der Bewegung der Exzenterelemente 9 in Richtung der Arbeitsposition im Aufnahmebereichen A, während sich die Halteeinrichtungen 15 in der ersten Translationsposition befinden. Fig. 7 stellt eine Weiterbildung der zweiten Ausführungsform durch Vervielfachung der Komponenten der Übergabevorrichtung dar.

Die Stangen 13 der Mehrzahl von Exzentereinheiten 2 sind parallel zueinander angeordnet und gemeinsam mit einer Koppelstange 35 verbunden. Die zweiten Linearlager 33b sind mit der Koppelstange 35 und die ersten Linearlager 33a mit den jeweiligen Stangen 13 verbunden. Jede Exzentereinheit 2 weist einen eigenen Aufnahmebereich A und einen eigenen Abgabebereich B auf.

## Patentansprüche

1. Übergabevorrichtung zum Übergeben von Verpackungseinheiten (3) von einem Aufnahmebereich (A) an einen Abgabebereich (B),
wobei die Übergabevorrichtung mindestens eine Exzentereinheit (2) umfasst, die aufweist:
ein drehbar gelagertes Exzenterelement (9), das eine in Radialrichtung von einer Rotationsachse (R) des Exzenterelements (9) beabstandete Stangendurchführung (19) aufweist, die parallel zur Rotationsachse (R) des Exzenterelements (9) verläuft;
eine Stange (13), die sich durch das Exzenterelement (9) hindurch erstreckt und die mittels der Stangendurchführung (19) drehbar und in Axialrichtung des Exzenterelements (9) verschiebbar gelagert ist;
eine Halteeinrichtung (15), die mit der Stange (13) verbunden ist und die dazu eingerichtet ist, mindestens eine Verpackungseinheit (3) aufzunehmen;
eine erste Antriebseinheit (11), die dazu eingerichtet ist, das Exzenterelement (9) zu rotieren, wodurch die Halteeinrichtung (15) in einer ersten Ebene, die senkrecht zur Rotationsachse (R) des Exzenterelements (9) ist, zwischen mindestens einer Rückzugsposition und mindestens einer Arbeitsposition bewegt wird; und
eine zweite Antriebseinheit (12), die dazu eingerichtet ist, die Stange (13) in Axialrichtung des Exzenterelements (9) zwischen mindestens einer ersten Translationsposition und mindestens einer zweiten Translationsposition zu verschieben, wodurch die Halteeinrichtung (15) parallel zur Rotationsachse (R) des Exzenterelements (9) bewegt wird.

2. Übergabevorrichtung nach Anspruch 1, **dadurch gekennzeichnet, dass** eine Drehlage der Halteeinrichtung (15) während der Rotation des Exzenterelements (9) unverändert bleibt.

3. Übergabevorrichtung nach Anspruch 1 oder 2, **dadurch gekennzeichnet, dass** die Stange (13) an einem Lagerelement (32) gegenüber einer Drehung um sich selbst fixiert ist und das Lagerelement (32) der aus der Rotation des Exzenterelements (9) resultierenden Drehbewegung der Stange (13) um die Rotationsachse (R) folgt.

4. Übergabevorrichtung nach einem der vorhergehenden Ansprüche, **dadurch gekennzeichnet, dass** die Stange (13) zumindest abschnittsweise eine hohle Stange ist.

5. Übergabevorrichtung nach einem der vorhergehenden Ansprüche, **dadurch gekennzeichnet, dass** die erste Antriebseinheit (11) und die zweite Antriebseinheit (12) unabhängig voneinander ansteuerbar sind.

6. Übergabevorrichtung nach Anspruch 5, **dadurch gekennzeichnet, dass** die Exzentereinheit (2) dazu eingerichtet ist, eine Bewegung der Halteeinrichtung (15) parallel zur Rotationsachse (R) des Exzenterelements (9) und parallel zur ersten Ebene zumindest abschnittsweise gleichzeitig auszuführen.

7. Übergabevorrichtung nach einem der vorhergehenden Ansprüche, **dadurch gekennzeichnet, dass** sie eine Mehrzahl von Exzentereinheiten (2) umfasst, die derart nebeneinander angeordnet sind, dass die Rotationsachsen (R) der Mehrzahl von Exzenterelementen (9) parallel zueinander angeordnet sind.

8. Übergabevorrichtung nach Anspruch 7, **dadurch gekennzeichnet, dass** die Stangen (13) von mindestens zwei bis hin zu allen Exzentereinheiten (2) miteinander gekoppelt sind.

9. Übergabevorrichtung nach Anspruch 7 oder 8, **dadurch gekennzeichnet, dass** die zweite Antriebseinrichtung (12) dazu eingerichtet ist, die Stangen (13) von mindestens zwei bis hin zu allen Exzentereinheiten (2) gemeinsam in Axialrichtung der Mehrzahl von Exzenterelementen (9) zwischen der mindestens einen ersten Translationsposition und der mindestens einen zweiten Translationsposition zu verschieben.

10. Übergabevorrichtung nach einem der vorhergehenden Ansprüche, **dadurch gekennzeichnet, dass** die Halteeinrichtung (15) dazu eingerichtet ist, eine Mehrzahl von Verpackungseinheiten (3) aufzunehmen.

11. Übergabevorrichtung nach einem der vorhergehenden Ansprüche, **dadurch gekennzeichnet, dass** die Halteeinrichtung (15) mindestens einen Sauggreifer (17) aufweist.

12. Übergabevorrichtung nach einem der vorhergehenden Ansprüche, **dadurch gekennzeichnet, dass** ein Abstand zwischen der ersten Translationsposition und der zweiten Translationsposition 30 bis 800 mm, bevorzugt 40 bis 700 mm und besonders bevorzugt 50 bis 600 mm beträgt.

13. Übergabevorrichtung nach einem der vorhergehenden Ansprüche, **dadurch gekennzeichnet, dass** eine Länge der Kreissehne zwischen der Rückzugsposition und der Arbeitsposition 10 bis 200 mm, bevorzugt 20 bis 150 mm und besonders bevorzugt 30 bis 100 mm beträgt.

14. Verfahren zum Übergeben von Verpackungseinheiten (3) von einem Aufnahmebereich (A) an einen Abgabebereich (B) mittels einer Übergabevorrichtung nach einem der vorangehenden Ansprüche,
wobei das Verfahren folgende Schritte aufweist:
- Rotieren des Exzenterelements (9) mittels der ersten Antriebseinheit (11), um die Halteeinrichtung (15) in eine Arbeitsposition zu bewegen;
- Aufnehmen der mindestens einen Verpackungseinheit (3) in dem Aufnahmebereich (A) mittels der Halteeinrichtung (15);
- Rotieren des Exzenterelements (9) mittels der ersten Antriebseinheit (11), um die Halteeinrichtung (15) in eine Rückzugsposition zu bewegen;
- Verschieben der Stange (13) von einer ersten Translationsposition in eine zweite Translationsposition mittels der zweiten Antriebseinheit (11);
- Rotieren des Exzenterelements (9) mittels der ersten Antriebseinheit (11), um die Halteeinrichtung (15) in eine Arbeitsposition zu bewegen;
- Abgeben der mindestens einen Verpackungseinheit (3) in dem Abgabebereich (B) mittels der Halteeinrichtung (15);
- Rotieren des Exzenterelements (9) mittels der ersten Antriebseinheit (11), um die Halteeinrichtung (15) in eine Rückzugsposition zu bewegen; und
- Verschieben der Stange (13) von der zweiten Translationsposition in eine erste Translationsposition mittels der zweiten Antriebseinheit (12).

15. Verfahren zum Übergeben von Verpackungseinheiten (3) nach Anspruch 14, **dadurch gekennzeichnet, dass** die Verpackungseinheiten (3) kontinuierlich auf einer Fördervorrichtung (5) bewegt werden und die Bewegungen der mindestens einen Exzentereinheit (2) mit der Bewegung der Verpackungseinheiten (3) auf der Fördervorrichtung (5) synchronisiert sind.
